(19) **Europäisches Patentamt / European Patent Office / Office européen des brevets**

(11) **EP 3 046 039 B1**

(12) **EUROPEAN PATENT SPECIFICATION**

(45) Date of publication and mention
of the grant of the patent:
**08.04.2020 Bulletin 2020/15**

(51) Int Cl.:
**G06F 30/20** $^{(2020.01)}$

(21) Application number: **15185632.5**

(22) Date of filing: **17.09.2015**

(54) **SYSTEM FOR AND METHOD OF DETERMINING CORROSION RISKS**

SYSTEM UND VERFAHREN ZUR BESTIMMUNG VON KORROSIONSRISIKEN

SYSTÈME ET PROCÉDÉ DE DÉTERMINATION DES RISQUES DE CORROSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2014 GB 201417081**

(43) Date of publication of application:
**20.07.2016 Bulletin 2016/29**

(73) Proprietor: **GRANTA DESIGN LIMITED
Cambridge CB1 7EG (GB)**

(72) Inventors:
• **AUSTIN, Nicholas Ekow
Cambridge, Cambridgeshire CB1 7EG (GB)**
• **CEBON, David
Cambridge, Cambridgeshire CB1 7EG (GB)**
• **PRANKERD SMITH, Thomas James Alexander
Cambridge, Cambridgeshire CB1 7EG (GB)**
• **RIDDELL SMITH, Thomas Hugh
Cambridge, Cambridgeshire CB1 7EG (GB)**

(74) Representative: **Gill Jennings & Every LLP
The Broadgate Tower
20 Primrose Street
London EC2A 2ES (GB)**

(56) References cited:
**WO-A2-2008/003867**

• **Keith Legg: "Computational Galvanic Corrosion Prediction", , 1 November 2011 (2011-11-01), XP055279706, Retrieved from the Internet: URL:http://www.rowantechnology.com/wp-content/uploads/2012/06/Legg-Galv-corr.pdf [retrieved on 2016-06-10]**
• **Dr Keith ET AL: "Contact information: Summary: ASETSDefense 2011 Side meeting on Computational and Database Methods", , 7 February 2011 (2011-02-07), XP055279707, Retrieved from the Internet: URL:http://www.asetsdefense.org/documents/Workshops/SustainableSurfaceEngineering2011/ASETS2011 Computational Side Meeting Summary - FINAL.pdf [retrieved on 2016-06-10]**

**Description**

The present invention generally relates to a system for and a related method of determining corrosion risks during the design of mechanical assemblies.

Systems for aiding the design of mechanical assemblies are well known and the use of modelling tools such as Computer Aided Design (CAD) software, for example, is widespread. It is also well known that predicting risks associated with the design of mechanical assemblies is paramount.

In particular, identifying a risk of corrosion during the design of mechanical assemblies is an important safety requirement. In order to predict corrosion, existing systems use finite element analysis (FEA) to produce detailed models of electrochemical processes that occur where solid materials interact with fluid environments. Calculations involved in such models, however, are expensive and are impractical for large mechanical assemblies. At present, there are no systems available that give an overview of likely risk areas when designing mechanical assemblies. Identifying risks during the design phase is desirable in order to allow the designer to make the necessary investigations and/or changes to the design, as required.

The present invention seeks to overcome the problems associated with existing systems.

Keith Legg: "Computational Galvanic Corrosion Prediction", 1 November 2011 and "ASETSDefense 2011 Side meeting on Computational and Database Methods" 7 February 2011 teaches the use of fine art element analysis in corrosion prediction. According to the present invention there is provided a system for identifying a corrosion risk during the design of a mechanical assembly, the system comprising: a design data unit for storing design data representing the mechanical assembly; a corrosion data unit for storing corrosion data; and a processor configured to: obtain design data from the design data unit; obtain, from the corrosion data unit, corrosion data relevant to the obtained design data; make a comparison of the obtained design data with the obtained corrosion data to identify a corrosion risk associated with the design; and provide, based on said comparison, an indication of the corrosion risk, wherein the obtained design data comprises data for all parts of the mechanical assembly and at least one constituent material associated with each part, and wherein the at least one part of the mechanical assembly is in contact with at least one environment, wherein the indication of the corrosion risk comprises an indication of a general corrosion risk associated with the at least one material in contact with the at least one environment, and wherein the obtained design data comprises at least one pair of parts, and wherein making a comparison comprises: grouping parts of the mechanical assembly into pairs and discarding from comparison those pairs where one of the parts is non-conductive; determining the existence of a galvanic circuit through the retained pairs of parts and the at least one environment that is a conductor of electricity; and determining a galvanic corrosion risk associated with the at least one pair of parts based on the galvanic potential difference between their respective constituent materials.

The system therefore uses analysis of design data and identification of a corrosion risk based on this design data. In particular, the system automatically obtains design data during the design operation, which may be carried out, for example, using tools known in the art, for example, CAD systems. With the present system, therefore, it is possible to accurately predict corrosion risk during the design of a mechanical assembly and modify the design at the design stage. It will be appreciated that the words 'design' and 'model' may be used interchangeably to represent the designed mechanical assembly.

The system according to the present invention represents a corrosion and advice tool that may operate in conjunction with established design tools for mechanical assemblies, including, amongst others, CAD software packages such as Pro/Engineer. Advantageously, the system may be used in the form of a 'plug-in' for integration into various software packages.

The obtained design data comprises at least one part of the mechanical assembly, at least one constituent material associated with the at least one part, and at least one environment for the mechanical assembly. The design data may further comprise a connection between the part and the environment which represents the 'adjacency' of the part to the environment, which may lead to the formation of a galvanic circuit. The obtained corrosion data may comprise at least one of a reference material name which may represent part materials or environment materials, environmental durability level associated with the reference material operating in that environment and a galvanic potential associated with a reference material.

According to the present invention, there is also provided a method of identifying a corrosion risk during the design of a mechanical assembly, carried out by the system. Specifically, making a comparison may comprise determining the existence of a galvanic circuit through the at least one environment; and determining a corrosion risk (i.e. galvanic risk) associated with the at least one pair of parts based on the potential difference between their respective constituent materials. The term 'galvanic circuit' (also referred to as a 'galvanic corrosion cell' or 'galvanic cell') is known in the art and will be described in more detail below. A galvanic circuit requires at least one electrical connection (direct or indirect) between the pair of parts, and a potential difference between them.

The word 'environment' may represent an environment region adjacent to different parts of the design. The system may advantageously treat an 'environment' as a part, when assessing an adjacency matrix, as described in more detail below.

A further advantage is that the corrosion risk may be assessed for multiple distinct environments (for example made of different electrolytes), as well as different regions of the same environment. Both of these cases are important for establishing galvanic cell circuits leading to corrosion.

Determining the existence of a galvanic circuit may comprise: determining whether the parts in the pair are made of distinct constituent materials; determining whether at least one of the part in the pair is an insulator; and determining whether the at least one environment is in contact with both parts in said pair. As such, the adjacency of parts in a design may also be relevant for corrosion behaviour. If an electrical current can pass between two parts other directly or indirectly, then a galvanic corrosion cell can be established. This means that more complex galvanic circuits through many parts need to be detected. Advantageously, the system detects electrical connections where a conductive part is in contact (directly or indirectly) with a conductive environment, and these electrical connections may be factored into indirect connection calculations.

Preferably, the system is configured to generate a corrosion risk report, also referred to as a risk assessment report. This may include links to advice for known cases, and may suggest, for example, alternative designs, materials, coating, or any other appropriate methods known in the art for avoiding corrosion in the specific design at risk. The risk assessment report may include galvanic risks, general risks, and risk ratings.

A galvanic risk refer to risks associated with design parts with a common environment which form a galvanic cell. A galvanic cell is an electrochemical cell wherein two conductive parts in contact with an electrolyte have a conductive path between them, as will be described in more detail below. The potential difference of the galvanic cell can drive electrochemical corrosion of one or more of the parts. Therefore if two parts with a common environment are made of different materials, there may be a corrosion risk which would be reflected in the report.

The processor may be configured to assess the level of the indicated corrosion risk, for example by making a risk analysis. The 'level' of a risk would indicate to the designer the importance of that risk. For example, a risk rating may be determined (and included in the risk assessment report), or the risk may simply be dismissed from the report, if such a risk is not consider relevant to the design.

It will be appreciated that environments may be corrosive to materials in many other ways, without the need for a second electrode and galvanic cell. This may be dependent, for example, on durability properties for material-environment pairs. As such, identifying a corrosion risk preferably comprises identifying a general risk associated with the design.

Obtaining design data from the design data unit may comprise generating a design data output file, such as an XML file, for example. The information in the output file may then be mapped, for example, via static look-up, to the obtained corrosion data.

The system may further comprise a report generator for generating a risk assessment report based on the indication provided by the processor. The risk assessment report may include at least one of a galvanic risk, a general risk, and a risk rating which rates the importance of the identified risks.

The obtained corrosion data may comprises at least one corrosion case and advice data, which may be included in the the risk assessment report to aid the designer during the design process.

According to the present invention there is also provided a method of identifying a corrosion risk during the design of a mechanical assembly, the method comprising the steps of:

> obtaining design data representing the mechanical assembly;
> obtaining corrosion data relevant to the obtained design data;
> making a comparison of the obtained design data with the obtained
> corrosion data to identify a corrosion risk associated with the design; and providing, based on said comparison, an
> indication of the corrosion risk.

Specific examples of the invention will now be described in greater detail with reference to the following figures in which:

> Figure 1 schematically represents a system in accordance with the present invention;
> Figures 2A and 2B represent the most basic galvanic cells;
> Figures 3A and 3B represent uncompleted galvanic cells;
> Figure 4 represents a galvanic cell with a non-conductive electrode;
> Figure 5 represents a galvanic cell with a non-conductive environment;
> Figure 6A represents galvanic cell paths with two environments;
> Figure 6B represents a double galvanic cell model;
> Figure 7 shows an example model tree;
> Figure 8 is a table representing an example master list of environment regions;

Figure 9 is a table representing an example environment connection list for a part that is in contact with two environments in the master list shown in Figure 3;

Figure 10 is an example of an XML output file representing design data obtained by the system;

Figures 11A and 11B respectively show a part table and an environment table used for storing design data;

Figure 12 schematically represents a method in accordance with the present invention;

Figure 13 is a schematic representation of a model used for an example risk analysis;

Figure 14 and 15 are tables showing examples of risk ratings;

Figure 16 shows a risk assessment report;

Figure 17 shows another risk assessment report;

Figure 18 is an example of a worksheet including corrosion case information;

Figures 19 to 25 show further examples of models which have been created to test the system according to the present invention for a variety of corrosion criteria;

Figures 26A and 26B respectively show galvanic and general tables from an assessment risk report;

Figure 27 shows a further risk report;

Figure 28 is a table representing corrosion cases associated with feature references defined by CAD software; and

Figure 29 shows octree diagrams.

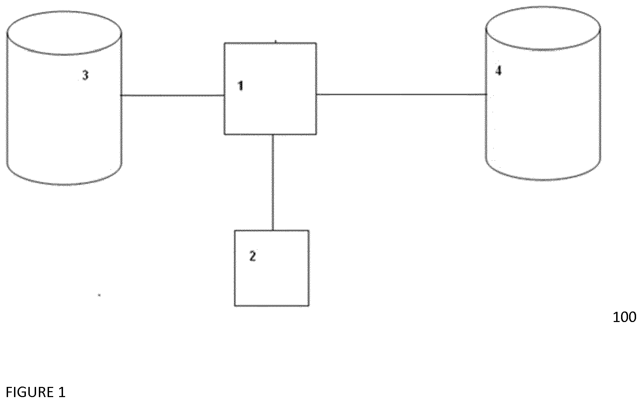

Figure 1 shows components of a system 100 for identifying a corrosion risk during the design of a mechanical assembly. The system 100 comprises a processor 1 connected to a user interface 2. This connection may be wired or wireless and the user interface 2 may be a personal computer, tablet or smart phone, for example. The processor 1 is coupled to a design data unit 3 which stores information on design data for the mechanical assembly. The processor 1 is configured to obtain design data from the design data unit 3, for use in the corrosion risk analysis. The design data includes parts of the mechanical assembly, materials associated with the parts, and environments (which may be fluid environments, representing electrolytes) that may be in contact with the parts, as well as other information relevant to the design.

The processor 1 is also coupled to a corrosion data unit 4 which holds information relevant to assessing the risk of corrosion based on the design data. The corrosion data unit 4 may include corrosion case information as well as additional data which may be used to compare the obtained design data against, so as to assess the likelihood of corrosion risk. The comparison may be done, for example, by static data look-up for mapping design data such as material names which are assigned to the reference material, information on environmental durability for each material and information on galvanic potential of materials in a standard environment. Each part in the model has an assigned material which would determine how the part will respond to different corrosive situations.

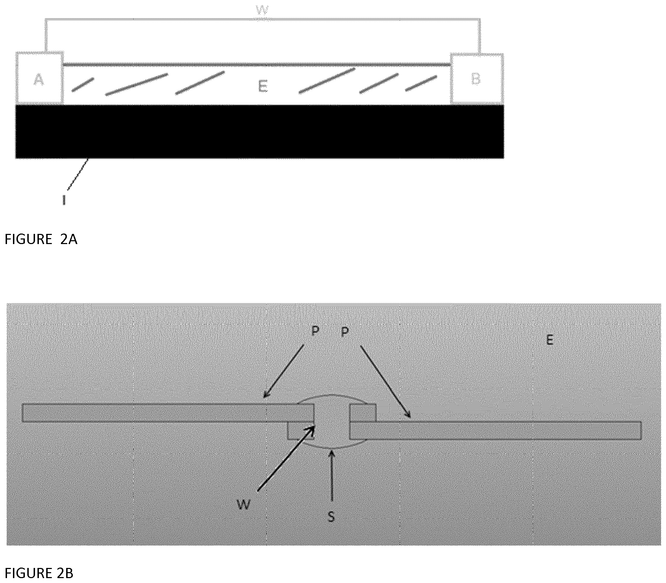

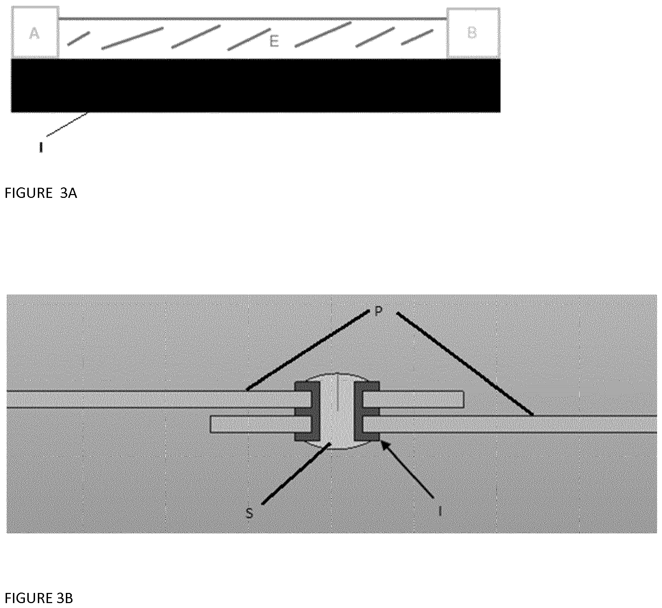

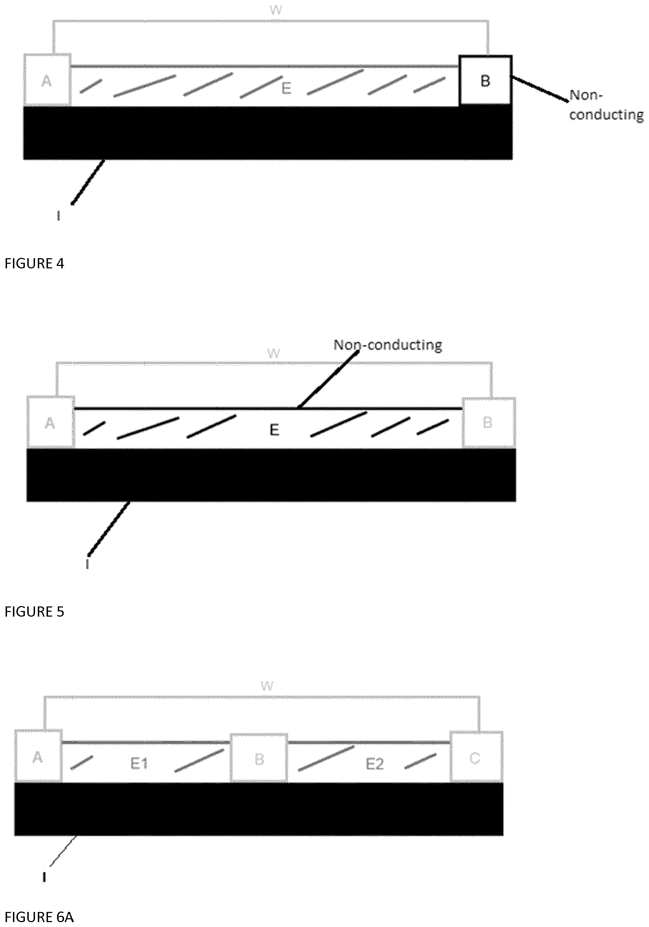

For galvanic corrosion to occur, there are several basic scenarios from which galvanic cells can be built, examples of which are being described herewith. These scenarios include: a basic electrochemical cell, also referred to as a galvanic cell (schematically shown in Figure 2A), an uncompleted cell (schematically shown in Figure 3A), a cell with non-conductive electrodes (schematically shown in Figure 4), a cell with a non-conductive environment (schematically shown in Figure 5), and cell paths through multiple environments (schematically shown in Figure 6A).

Referring to Figure 2A, two parts A and B, made of conductive material (such as steel) are in contact with an electrolyte (such as salt water), which represents an environment E. In this example, the parts are positioned on an insulator I made of an appropriate insulating material (rubber, for example). The two parts, A and B, have a conductive path, also referred to as a return path, W, between them. The conductive path may be either a direct path, or may consist of other conductive paths and environments. As such, the two parts, A and B, act as electrodes, with a potential difference across the cell. In this scenario, the risk assessment is considered to be dependent purely on the galvanic potential difference and not on the nature of the electrolyte or the specific geometry of the cell.

Figure 2B shows a model of riveted plates which corresponds to the basic electrochemical cell scenario shown in Figure 2A. In this model, 2 copper plates P, corresponding to part A are in direct contact with an iron or carbon steel bolt S, corresponding to part B, the formed conductive path W being the direct contact between the copper plates and the steel bolt, in a water environment (E).

Figure 3A schematically shows an "uncompleted cell" scenario. An uncompleted cell is an electrochemical cell which is the same as the basic electrochemical cell shown in Figure 2A, except there is no separate return path (W) completing the galvanic circuit (in other words, all potential return paths W would go through non-conductive parts of the model). Corrosion may still be possible in uncompleted cells by diffusion of ions between the parts A and B, or some other mechanism. Figure 3B shows an uncompleted cell formed by two riveted plates P made of a conductive material, such as metal. The plates P are insulated from rivet S with a rubber part I, thereby preventing conductive return path W.

Figure 4 shows a galvanic cell with no conductive path (as with the uncompleted cells), however, in this case, electrode B is made out of an insulating material. For this scenario, the system does not predict galvanic corrosion.

Some environments may be non-conductive, for example electrolytes such as diesel oil. Non-conductive environments do not provide a conductive path for galvanic cells, as shown in Figure 5. In order for these scenarios to be accounted for, the environment conductivity may be assessed using static lookup tables, as will be explained in more detail below.

Referring to Figure 6A, conductive paths through two environments E1 and E2 may exist between three conductive parts, A, B, and C. The current in a basic galvanic cell is limited by the cell potential and the resistance of the conductive path. In this case, however, conduction through environment E2 may be required to complete the A-B cell, while conduction through the environment E1 may be required to complete the B-C cell. If E1 is a low conductivity environment in the case of the B-C cell, this would mean a significantly lower corrosion rate than for the basic galvanic cell equivalent. (Similarly for E2 and the A-B cell.) A worst case approach may be taken, for example by treating the second environment in each circuit as being a good conductor, and then evaluating the A-B, and B-C cells as if they were independent basic cells.

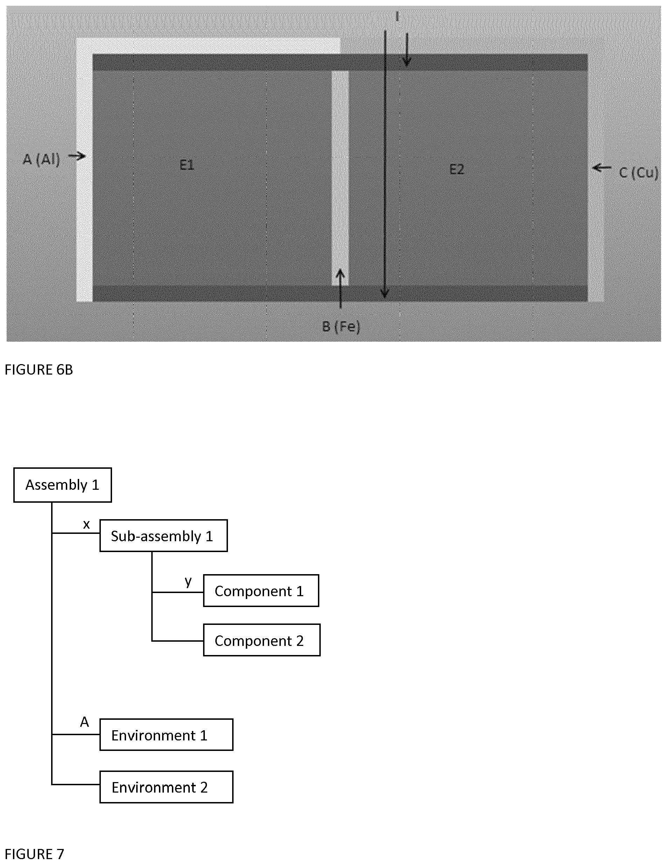

A double cell model as shown in Figure 6B illustrates the scenario of Figure 6A. A conductive circuit is formed through conductive parts A, B, C made respectively of aluminium (Al), Iron (Fe) and Copper (Cu) via two separate bodies of salt water (E1 and E2). Insulation parts (I) such as rubber are also provided between the conductive parts.

The manner in which design data is extracted by the processor 2 from the design data unit 3 to assess the risk of corrosion is described herewith with reference to a standard Computer Aided Design (CAD) software package, such as Pro/Engineer. It will be appreciated, however, that other design data units and associated packages may be used. In this example, the present invention is implemented as a "plug-in" to the standard design package.

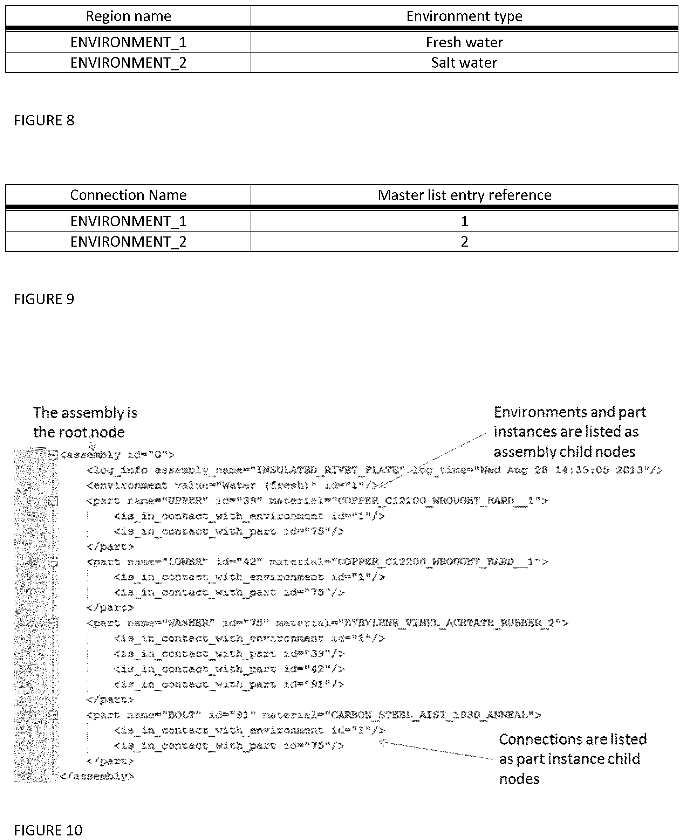

A "master list" of environment regions on a designed mechanical assembly is usually stored in the form of parameters for the designed mechanical assembly. An exemplary design for a mechanical assembly is represented as a model tree in Figure 7. The parameters may be stored, for example, as name - type pairs where the name identifies a region on the model and the type defines what the environment is made of, out of a predefined selection of possible types. An exemplary master list of environment regions is shown in the table of Figure 8.

Contacts between parts and environments (also referred to as environment connections) are defined for each part.

Figure 9 shows an example environment connection list for a part that is in contact with both environments in the master list shown in Figure 8. In this example, both types of parameters have names beginning with 'ENVIRONMENT_' in order to be detected by the model analysis, although it will be appreciated that this is not essential.

The system traverses the design data using appropriate functions (known as "visit functions", e.g. "ProSolid-FeatVisit", "ProParameterVisit") to gather a description of all part instances in the model tree, and the materials, environments and environment connections associated with the model. The system then tests all pairs of part instances (using, for example, data identifying part references and assembly tree locations) to see if they are in contact, for example by checking binary interference output parameters.

Environments are assigned IDs when they are detected by the plug-in and these IDs are the references used in connections. Part instance IDs are also used but these are directly constructed from Pro/ENGINEER's feature ID system.

The system may produce an output file, such as an XML output file of information for the analysis in an external software system. The output file includes information on how parts and environment regions are connected and what they are made of (i.e. the material attribute for parts and the value attribute for environment regions).

The insulated riveted plates model which was described above with reference to Figure 3B is used to illustrate the features of the XML output file shown in the example of Figure 10. It can be seen from this output file that the assembly is the root node, environments and part instances being listed as assembly child nodes. The connections between the part instances and environments are listed as part instance child nodes.

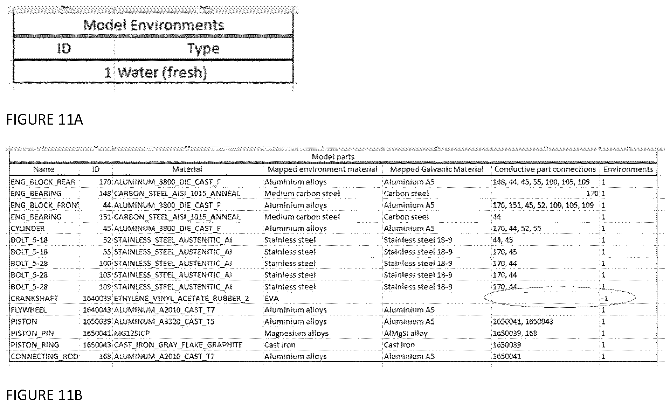

The next step is the analysis of the extracted design data, obtained directly from a software plugin or from the XML output file (as described above), in order to identify corrosion risks. First, the material names in the output file are mapped via static lookup to reference materials in lookup tables (which are part of the obtained corrosion information). The imported design data is stored in a environment table and an part table in the processor as shown schematically in Figures 11A and 11B, respectively.

Once the import of design data is complete, the system checks whether each part is conducting via another static lookup for the, already mapped, reference material associated with it. If it is non-conductive, the part cannot form a galvanic cell, therefore its part connections are irrelevant and are cleared from the part table entry. Its environment connections are also unable to take part in galvanic cells, but they can be associated with general corrosion risks, therefore they are not removed from the part table in the same way. Instead, the environment connections are marked to be excluded from galvanic cell calculations, for example by their ID references becoming negative (using the sign as a convenient flag). This negation may also be used for non-conductive environments; alternatively, all environments may be defined as conductive for a worst-case analysis.

Referring to the example shown in Figure 11B, the oval highlights that a crankshaft part has no conductive connections because it is (arbitrarily and for demonstration purposes only) made of insulating rubber, and equally no parts are electrically connected to it. Additionally, its environment, despite being the same as that of every other part, is marked as negative to indicate that the connection between the crankshaft and the fresh water environment in a galvanic cell should not be included in the connectivity analysis.

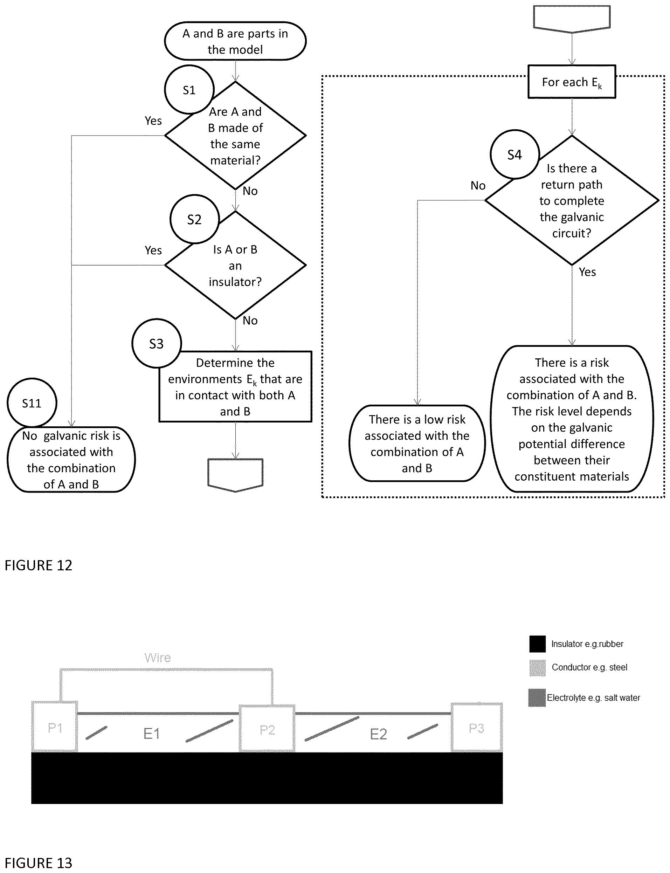

Figure 12 schematically represents a method in accordance with the present invention. At step S0, all parts in the model are obtained from the design data unit 3, as described above, and then grouped into pairs. For each pair (A, B) in the model, their constituent materials (also stored in the design data unit 3 and obtained as described above) are compared at step S1. The conductivity of each material in the pair (A, B) is analysed (at step S2), and if either part A or B is non-conductive, than the pair of parts is discarded (at step S11). The "binary conductivity" of individual materials is determined based on conductivity categories assigned, and this information may be obtained from an appropriate reference database stored in the corrosion data unit 4. A binary conductivity is established when both constituent materials in the pair are conductive. Materials rated as poor or good conductors are conductive, while semiconductors and insulators are considered to be non-conductive.

Step S3 determines the environments $E_k$ that are in contact with both parts A and B. If one environment $E_k$ is connected to both parts A and B, a galvanic risk is detected. At step S4, it is determined whether there is a "return path" for A, B, $E_k$ to form a complete galvanic circuit. This requires that A and B are electrically connected by a path that does not include $E_k$.

There are many material properties that are relevant to corrosion. The corrosion information used by the system (obtained from the corrosion data unit 4) as relevant to the obtained design data (obtained from the design data unit 3) includes conductivity, environmental durability and galvanic potential.

The adjacency of parts is also relevant for corrosion behaviour. If an electrical current can pass between two parts either directly or indirectly, then a galvanic corrosion cell can be established. This means that more complex galvanic circuits through many parts need to be detected. Advantageously, the system detects electrical connections where a conductive part is in contact with a conductive environment, and these electrical connections are factored into indirect connection calculations.

Once the conductivity of each part and environment is established, a basic adjacency matrix, A, is generated from the remaining direct electrical connections. The indirect electrical connections are extrapolated for each environment as described below.

The adjacency matrix A represents direct contact between parts and environments. For a model with n parts and m environments, A is an (n + m) by (n + m) symmetric matrix.

$$A_{ij} = 1 \text{ if three conditions are met:}$$

$$- \text{ At least one of } i \text{ or } j \text{ is a part as opposed to an environment}$$

$$- i \text{ and } j \text{ are both conductive}$$

$$- i \text{ and } j \text{ are in direct geometric contact}$$

$$A_{ij} = 0 \text{ otherwise}$$

Matrix A is then used for stage S4 of the galvanic risk analysis. However, to analyse return paths through common environment $E_k$ (established in S3) are excluded. Matrices $A^E$ are produced as follows:

$$A_{ij}^{E_k} = A_{ij} \text{ if } i \neq E_k \text{ and } j \neq E_k$$

$$A_{ij}^{E_k} = 0 \text{ otherwise}$$

This direct contact information is extrapolated to both direct and indirect contact as follows:

$$T^{E_k} = \sum_{r=1}^{n+m-1} (A^{E_k})^r$$

$$T_{ij}^{E_k} = 1 \; if \; a \; path \; exists \; between \; i \; and \; j \; that \; does \; not \; pass \; through \; E_k$$

$$T_{ij}^{\bar{E}_k} = 0 \; otherwise$$

In order to obtain this binary result, Boolean algebra is used in this example, with addition replaced with Boolean OR, and multiplication replaced with Boolean AND. The matrix $T^{Ek}$ is used in Step S4 to analyse galvanic risks.

An example risk analysis is given herewith with reference to a model represented schematically in Figure 13.

$$A = \begin{array}{c} \\ P1 \\ P2 \\ P3 \\ E1 \\ E2 \end{array} \begin{array}{ccccc} P1 & P2 & P3 & E1 & E2 \\ \begin{pmatrix} 0 & 1 & 0 & 1 & 0 \\ 1 & 0 & 0 & 1 & 1 \\ 0 & 0 & 0 & 0 & 1 \\ 1 & 1 & 0 & 0 & 0 \\ 0 & 1 & 1 & 0 & 0 \end{pmatrix} \end{array}$$

$$T^{E1} = \begin{array}{c} \\ P1 \\ P2 \\ P3 \\ E1 \\ E2 \end{array} \begin{array}{ccccc} P1 & P2 & P3 & E1 & E2 \\ \begin{pmatrix} 1 & 1 & 1 & 0 & 1 \\ 1 & 1 & 1 & 0 & 1 \\ 1 & 1 & 1 & 0 & 1 \\ 0 & 0 & 0 & 0 & 0 \\ 1 & 1 & 1 & 0 & 1 \end{pmatrix} \end{array}$$

$$T^{E2} = \begin{array}{c} \\ P1 \\ P2 \\ P3 \\ E1 \\ E2 \end{array} \begin{array}{ccccc} P1 & P2 & P3 & E1 & E2 \\ \begin{pmatrix} 1 & 1 & 0 & 1 & 0 \\ 1 & 1 & 0 & 1 & 0 \\ 0 & 0 & 0 & 0 & 0 \\ 1 & 1 & 0 & 1 & 0 \\ 0 & 0 & 0 & 0 & 0 \end{pmatrix} \end{array}$$

It can be seen from the example represented in Figure 13 that component parts P1 and P2 have a common environment E1 and that, from $T^{E1}$ there is a conductive path for this risk cell. It can also be seen that parts P2 and P3 have common environment E2, and that, from $T^{E2}$ there is no conductive path for this risk cell.

In summary, the analysis of the imported XML design data (or in the plugin) may include the following steps:

1. All pairs of parts with a common environment are detected as potential galvanic corrosion risks, and all parts in environments are detected as general corrosion risks;
2. Potential galvanic corrosion risks are removed if both parts are the same material or if either part is non-conductive;
3. Each potential galvanic risk is checked for a return path completing the galvanic circuit, and the outcome of this check is recorded with the risk; and
4. Risk ratings are calculated for each potential risk.

A report generator may be used to generate a risk assessment report based on the indication provided by the processor. The risk assessment report may include galvanic corrosion risks, general corrosion risks, and risk ratings.

As described above, the analysis required for generating a risk report uses adjacency checks to produce a list of all part-environment adjacent pair general corrosion risks, and all adjacent anode-electrolyte-cathode group galvanic corrosion risks, noting whether a connection exists to complete the circuit for the galvanic risk. Galvanic risks are eliminated from the list if the two parts involved are made of the same material. Each of these parts are assigned a risk level (and possibly combined into a smaller number of separate entries) when the report is generated.

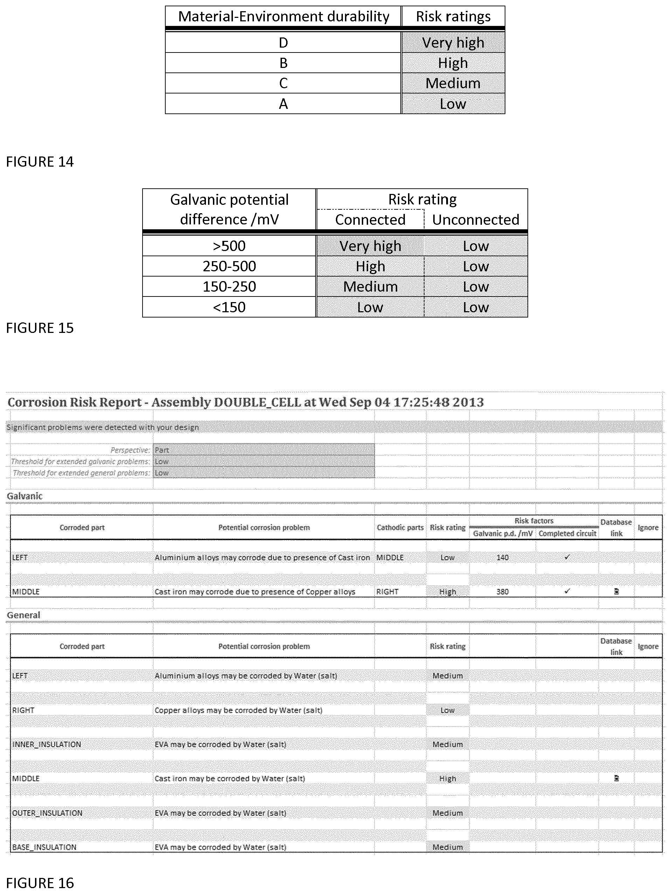

For general corrosion risks, the risk ratings may be based on environment durability data source, ranging from A (Low risk rating) to D (very high risk rating), as represented in the table of Figure 14. For galvanic corrosion risks, the rating is preferably based both on galvanic potential data and on whether there is a complete electrical circuit for the galvanic cell, as defined above (an example of which is given in Figure 15).

Corrosion risks may relate to 'uncompleted cells', as discussed above with references to Figures 3A and 3B. As explained above, corrosion may still be possible in uncompleted cells by diffusion of ions between the parts. For uncompleted cells, the risk is identified by the system, but it may be rated as 'low', for example in the risk assessment report in Figure 15, regardless of the potential difference.

There are several possible enhancements to risk ratings which are envisaged. Additional risk analysis may take into account, for example, detailed information such as surface area ratios and the possibility of diffusion between environments. Conservation of current means that the surface area ratio between anode and cathode contact with the environment can drastically affect corrosion risk. To use this information, there needs to be precise specification of what surfaces of a part are in contact with an environment.

Further, a simple binary test that could be added is whether the environment is likely to be a continuous body through which diffusion can occur between the electrodes of a galvanic cell (i.e. a bulk liquid) or whether it is a gas or condensation. This affects the risk level in the case where there is no return path for the environment and could be represented as medium risk for liquid environments and low risk for gaseous environments

An example of a risk report is shown in Figure 16. The risk report contains a table for galvanic risks and a table for general risks. Risk levels are calculated for the potential risk list by static lookup of general durability rating or galvanic potential difference.

Information presented in the risk entries includes: the combination of materials and environments involved in the risk; the part that is corroded, the risk rating (with a traffic light-type colour); and a link to the case database if a similar case exists. Additionally, information in the galvanic table includes: parts acting as cathodes for the risk cell; the galvanic potential difference of the cell; and the result of the connectivity calculation for the cell (as ✓=completed cell or ✗=uncompleted cell).

Risks are combined when they are indistinguishable from the corroded part's perspective (e.g. due to the simplicity of the analysis). If the same part is corroded, the same materials and environment types are involved, and the connectivity is the same, then only one entry is produced regardless of specific environment bodies and cathodic parts. When viewed from the perspective of corroded materials, entries are compressed even further with all corroded parts of the same material having their equivalent entries combined.

The header of the report may indicate the name of the assembly and when the corrosion snapshot of the assembly was taken (i.e. when the XML was generated). It may also indicate a 'good' or 'bad' rating of the assembly which is based on whether there are high corrosion risks present. There may be fields with dropdown menus to control the content of the report. These fields would select between part- or material-based layouts, and set the lowest risk level that is displayed for each corrosion type.

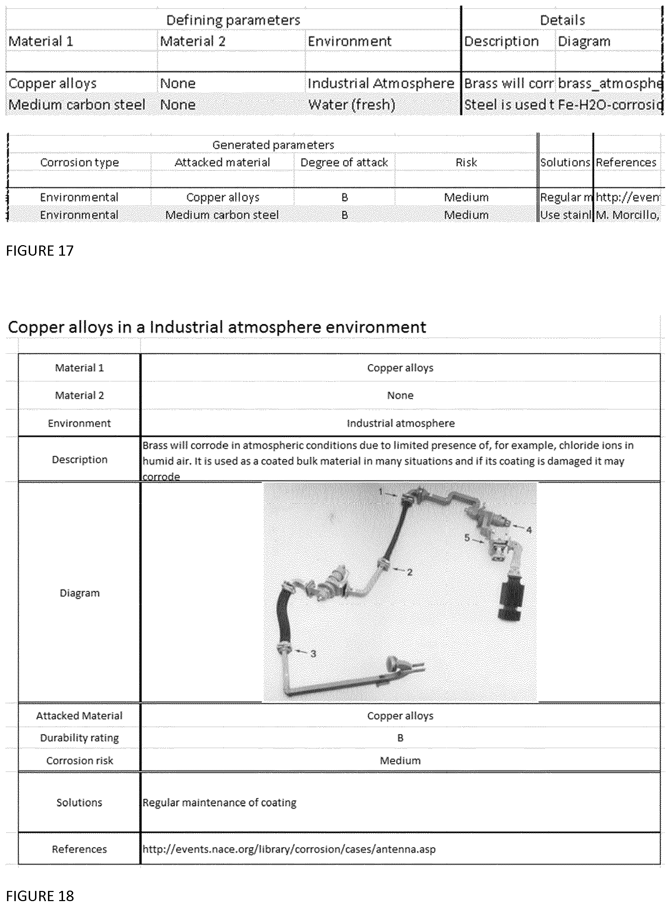

Figure 17 shows another risk report, in an Excel table which is split in two in order to make it more readable. Cases are indexed by materials and environment. Each case refers to an illustrative example which includes a diagram and a description. The case database stored in the corrosion data unit 4 uses static lookups to fill in durability data and risk ratings. Cases also include corrosion prevention solutions for, and references to, their illustrative example.

The risk report may generate a case datasheet link whenever a report risk matches an entry in the case database stored in the corrosion data unit 4. Matches are detected when the materials and environment are the same for the report risk and the database entry. The intent of the case database is to provide general advice and to be used to store company design policies regarding corrosion, with the company-wide solution to a particular type of corrosion risk (such as iron in contact with copper, solved by application of a coating) automatically linked when a model-specific report detects that risk.

Navigating a datasheet link in the risk report transfers the view to a worksheet filled in with the relevant corrosion case entry, as shown in Figure 18.

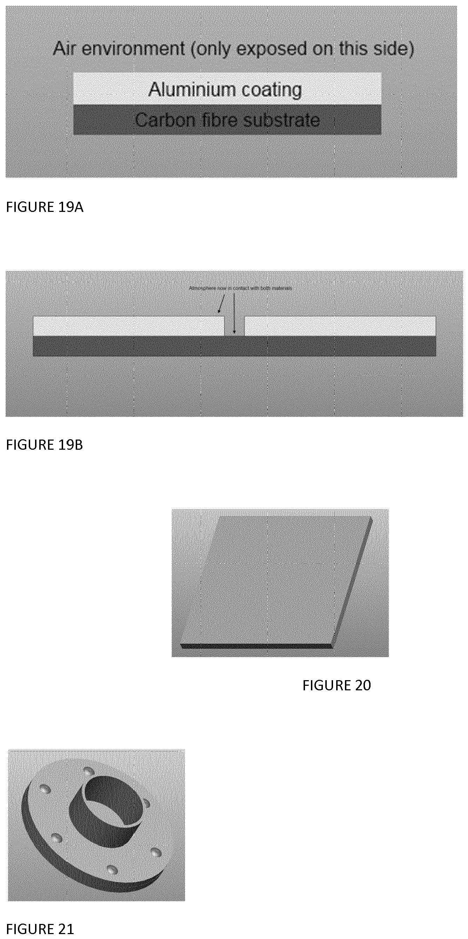

A set of model assemblies has been created that tests a variety of corrosion criteria, and this set was used to validate the implementation of the system described above. These model assemblies include a pair of riveted plates, with and without insulation, as shown in Figures 2B and 3B, respectively, which test the analysis of connected parts and conductivity of materials. Further model assemblies include two mated sheets representing a coated surface, with and without a scratch (as shown in Figures 19A and 19B, respectively), to test the method's ability to respond to imperfections in a surface.

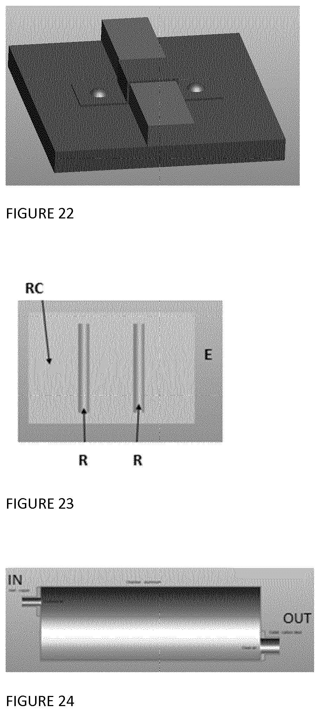

Figure 20 shows a very basic single object in an environment, useful early on as a basic functionality check. Figure 21 shows a closed pipe, which could be used to test analysis of flow effects. Figure 22 shows a saddle joint, which could be used to test geometric analysis such as crevice corrosion. Figure 23 shows a block of reinforced concrete RC, with embedded reinforcing bars R made from stainless steel, in a salt water environment E. The block of reinforced concrete is a very common corrosion situation because concrete is so widely used. Figure 24 shows an exhaust system, which has the ability to test gradual environment change. The exhaust system is made of a chamber of aluminium, with an outlet of copper for letting in corrosive air, and an outlet of carbon steel for letting out clean air. A battery with two galvanic cells in series, which tests the analysis of more complex scenarios, was described above with reference to Figure 6B.

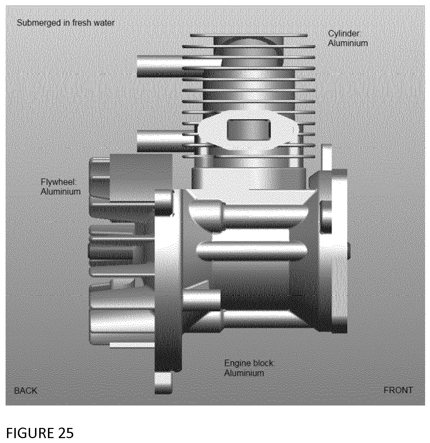

Figure 25 shows an example of an engine representing a drill model consisting of 16 parts, which tests the analysis of a larger model. The engine is largely made of ferrous materials and aluminium. The engine is submerged in fresh water, but some parts are internal and therefore not in contact with the water. The model is designed in Pro/ENGINEER, and has materials and environments assigned through a software plugin. The plug-in is run and design data is extracted in the form of XML data, which is then used by a "report tool" to generate a risk assessment report based on the comparison with the relevant corrosion data. Alternatively the plugin could generate the risk assessment report itself without need for the external tool and XML file.

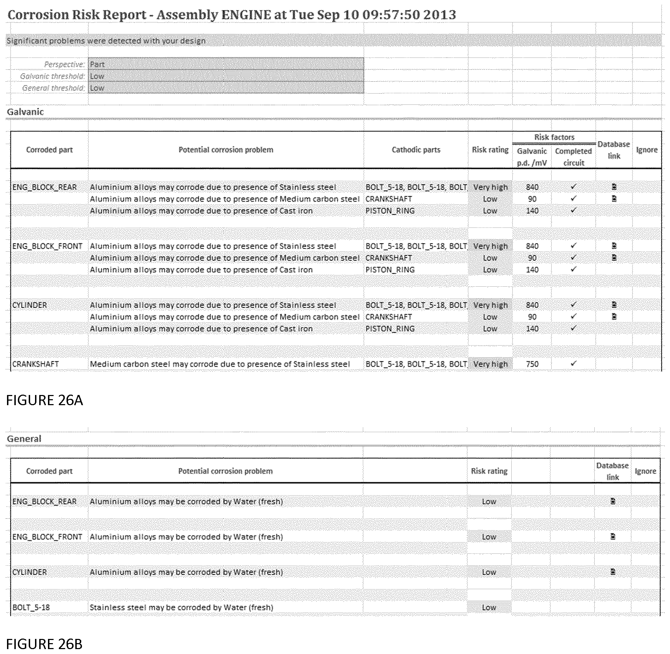

One might expect that making the engine's bolts from stainless steel would reduce total corrosion risk since stainless steel is a noble metal. However, the system correctly identifies in the report that this is not the case. An excerpt from the galvanic table in the report for this drill model is shown in Figure 26A. Although the bolts themselves are not corroded, they act as cathodes for high risk galvanic cells corroding the largest parts of the assembly - the engine block and cylinder - and lead to corrosion risks with both aluminium and medium carbon steel.

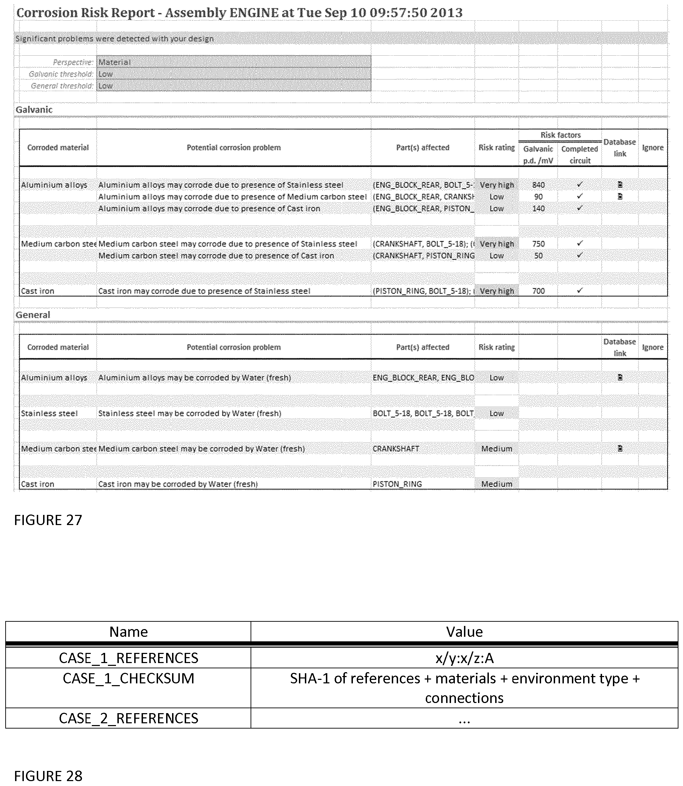

The general corrosion table from the report, as illustrated in Figure 26B, shows that direct corrosion of the parts by the environments is less of a concern. This example also shows the merit of sorting material-based report where the risk due to the bolts is more evident, as illustrated in Figure 27. The list of risks in this example is very short in terms of materials because there are so few different materials in the model. As a result, high proportion of entries - all of the high risk entries in fact - are contributed to by stainless steel in the bolts.

The report may be generated in the form of a "dashboard" (not shown) in the user interface 2. A summary dashboard report may also be implemented to provide risk counts from the analysis, and compare these to a baseline. Such a "dashboard report" may act as a filter control for viewing specific detected risks.

An assembly-specific corrosion risk dismissal functionality is envisaged. The reasoning behind this functionality is that it is very possible that the corrosion analysis to not have enough information to dismiss some cases where there is a mitigating factor that lowers risk. In such cases, with this functionality, the user may, either by picking up on information that the tool is not aware of, or by already being aware of a solution to a particular risk, decide that they don't want that risk cluttering the report. In that situation, it would be useful to add it to a list of risks for the report to ignore, which would be associated with the particular assembly.

Figure 7 discussed above schematically shows a model tree. The ignored risks may be stored either for the assembly or for the corroded assembly component. They may be stored, for example, as a set of tree references to the model parts and environments involved in the case, with a checksum that uses the data previously found at those tree references in order to establish whether the case is still relevant.

Referring to Figure 28, x, y and z are feature references defined by the CAD software and A is an assigned reference which may be used to store a case reference. The checksum would have to factor in the references, the materials of the parts, the type of the environment and the connections associated with the parts in order to incorporate all the information that might change and make the case irrelevant. Without this, the system could ignore a risk that is different from the risk originally stored. These risks would have to be attached to a "Bill of Materials" (BOM) in order to be incorporated into the report.

It will be appreciated that the user interface 2 has functionality to enable a user of the system to interact in an appropriate manner with the design and corrosion data used in the analysis. Such functionality may include, for example, selecting or highlighting by the user of one or more component parts in contact with a given environment. The selected parts could be deleted, renamed, or linked to datasheets storing data associated with the selected parts. Alternatively or additionally, a component part may be added by the user. A default name or type of the part may be used and the system may automatically set environments, or connections between parts and environments.

For example, functionality may be implemented to manually assign connections between parts and environments, as well as customisation. For complex mechanical assemblies, automatic environment setup is preferred. This setup may be done, for example, by a "flood fill" analysis algorithm, which requires geometric knowledge of the empty space regions in the model and what parts are in contact with these regions.

An example of a method for analysing this in the Pro/ENGINEER package includes the following steps:

I. Establish a bounding box for the model;

II. Use ray tracing starting from points on a grid on one the box faces. This will provide ranges at which the rays intersect with faces, and the details (including owner parts) of the faces; and

III. Convert the results from the 2D grid ray tracing to a 3D grid for use with a flood-fill algorithm, using the surface ownership data to record what parts are where in the grid.

The flood fill algorithm can run in a package-independent context, for other CAD packages where a 3D grid can be established. There are several different coordinate systems used in both the inputs and outputs of such algorithms.

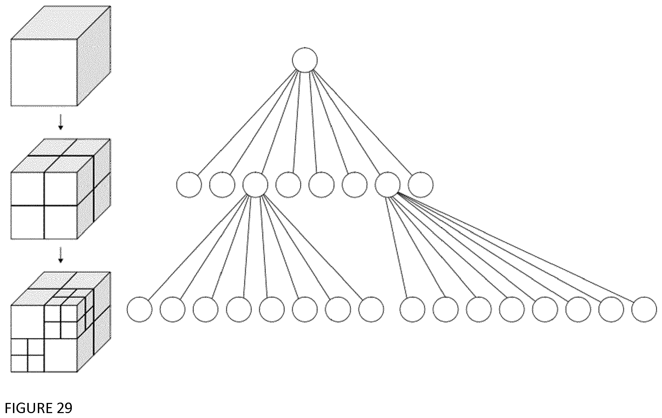

To implement the flood-fill algorithm, octrees known in the art are an efficient strategy for filling in the grid. These involve starting with a low resolution grid and only subdividing it where more detail is needed (i.e. where a cell overlaps several regions or parts). Examples of octree diagrams are shown in Figure 29.

It will also be appreciated that the specific feature of the system or method steps may be altered without departing from the present examples. In particular, the specifics of the user interface or corrosion report may change according to design requirements and any particular design packages used.

Other variations and modifications will be apparent to the skilled person. Such variations and modifications may involve equivalent and other features which are already known and which may be used instead of, or in addition to, features described herein. Features that are described in the context of separate embodiments may be provided in combination in a single embodiment. Conversely, features which are described in the context of a single embodiment may also be provided separately or in any suitable sub-combination.

**Claims**

1.   A system for identifying a corrosion risk during the design of a mechanical assembly, the system comprising:

   a design data unit for storing design data representing the mechanical assembly;
   a corrosion data unit for storing corrosion data; and
   a processor configured to:

      obtain design data from the design data unit;
      obtain, from the corrosion data unit, corrosion data relevant to the obtained design data;
      make a comparison of the obtained design data with the obtained corrosion data to identify a corrosion risk associated with the design; and
      provide, based on said comparison, an indication of the corrosion risk, wherein the obtained design data comprises data for all parts of the mechanical assembly and at least one constituent material associated with each part,
      wherein the obtained design data indicates that the at least one part of the mechanical assembly is in contact with at least one environment, wherein the indication of the corrosion risk comprises an indication of a general corrosion risk associated with the at least one material in contact with the at least one environment, and
      wherein the parts of the mechanical assembly comprise at least one pair of parts, and wherein making a comparison comprises:

         grouping the parts of the mechanical assembly into pairs and discarding from the pairs of parts, pairs where at least one of the parts is non-conductive;
         determining the existence of a galvanic circuit through the retained pairs of parts and the at least one environment that is a conductor of electricity; and
         determining a galvanic corrosion risk associated with the at least one pair of parts based on the galvanic potential difference between their respective constituent materials.

2.   A system according to claim 1, wherein the processor is further configured to identify all parts in contact with each environment and all environments in contact with each part, using the obtained design data.

3.   A system according to claim 1, wherein determining the existence of a galvanic circuit comprises:

   determining whether the parts in said pair are made of distinct constituent materials;
   determining whether at least one of the parts in said pair has a greater galvanic potential than the other; and
   determining whether the at least one environment is in contact with both parts in said pair.

4.   A system according to claim 1 or claim 3, wherein determining the existence of a galvanic circuit comprises determining a direct or indirect electrical connection between the parts in said pair.

5.   A system according to any one of claim 1, wherein the obtained design data comprises two or more parts, and wherein making a comparison comprises determining the existence of one or more electrical connections through the two or more parts and the at least one environment.

6.   A system according to claim 5, wherein determining the existence of one or more electrical connections comprises determining a direct or indirect electrical connection.

7. A system according to any one of the preceding claims, wherein making a comparison comprises mapping information from the design data unit to the obtained corrosion data.

8. A system according to any one of the preceding claims, the system further comprising a report generator.

9. A system according to claim 8, wherein the processor is further configured to assess the level of the indicated corrosion risk.

10. A system according to any one of the preceding claims, wherein, in use, the system forms a plug-in component in a CAD system.

11. A system according to any one of claims 8 to 10, wherein the obtained corrosion data comprises at least one corrosion case and advice data, and wherein the request includes the at least one corrosion case and advice data.

12. A system according to any one of the preceding claims, wherein the obtained corrosion data comprises at least one of a material name, environmental durability level associated with a material-environment combination and a galvanic potential associated with a material.

13. A method of identifying a corrosion risk during the design of a mechanical assembly, the method carried out by the system of any preceding claim.

**Patentansprüche**

1. System zur Identifizierung eines Korrosionsrisikos während des Designs einer mechanischen Baugruppe, wobei das System umfasst:

   eine Designdateneinheit zum Speichern von Designdaten, welche die mechanische Baugruppe darstellen;
   eine Korrosionsdateneinheit zum Speichern von Korrosionsdaten; und
   einen Prozessor, der für Folgendes ausgelegt ist:

   Abrufen von Designdaten aus der Designdateneinheit;
   Abrufen von Korrosionsdaten, die für die abgerufenen Designdaten relevant sind, aus der Korrosionsdateneinheit;
   Durchführen eines Vergleichs der abgerufenen Designdaten mit den abgerufenen Korrosionsdaten, um ein Korrosionsrisiko zu identifizieren, das mit dem Design assoziiert ist; und
   Bereitstellen eines Hinweises auf das Korrosionsrisiko auf Basis des Vergleichs, wobei die abgerufenen Designdaten
   Daten für alle Teile der mechanischen Baugruppe und mindestens ein Komponentenmaterial, das mit den einzelnen Teilen assoziiert ist, umfassen,
   wobei die abgerufenen Designdaten angeben, dass das mindestens eine Teil der mechanischen Baugruppe mit mindestens einer Umgebung in Kontakt steht, wobei der Hinweis auf das Korrosionsrisiko einen Hinweis auf ein allgemeines Korrosionsrisiko umfasst, das mit dem mindestens einen Material assoziiert ist, das mit der mindestens einen Umgebung in Kontakt steht, und
   wobei die Teile der mechanischen Baugruppe mindestens ein Teilepaar umfassen, und wobei das Durchführen eines Vergleichs umfasst:

   Gruppieren der Teile der mechanischen Baugruppe zu Paaren und Aussondern von Paaren, bei denen mindestens eines der Teile nichtleitend ist, von den Teilepaaren;
   Bestimmen des Vorhandenseins eines galvanischen Stromkreises durch die beibehaltenen Teilepaare und die mindestens eine Umgebung, die ein Elektrizitätsleiter ist; und
   Bestimmen eines Risikos für eine galvanische Korrosion, das mit dem mindestens einen Teilepaar assoziiert ist, auf Basis der Differenz des galvanischen Potentials zwischen seinen jeweiligen Komponentenmaterialien.

2. System nach Anspruch 1, wobei der Prozessor ferner dafür ausgelegt ist, alle Teile, die mit den jeweiligen Umgebungen in Kontakt kommen, und alle Umgebungen, die mit den jeweiligen Teilen in Kontakt stehen, unter Verwendung der abgerufenen Designdaten zu identifizieren.

3. System nach Anspruch 1, wobei das Bestimmen des Vorhandenseins eines galvanischen Stromkreises umfasst:

Bestimmen, ob die Teile des Paars aus unterschiedlichen Komponentenmaterialien bestehen;
Bestimmen, ob mindestens eines von den Teilen des Paars ein größeres galvanisches Potential aufweist als das andere; und
Bestimmen, ob die mindestens eine Umgebung mit beiden Teilen des Paars in Kontakt steht.

4. System nach Anspruch 1 oder Anspruch 3, wobei das Bestimmen des Vorhandenseins eines galvanischen Stromkreises das Bestimmen einer direkten oder indirekten elektrischen Verbindung zwischen den Teilen in dem Paar umfasst.

5. System nach einem von Anspruch 1, wobei die abgerufenen Designdaten zwei oder mehr Teile umfassen, und wobei das Durchführen eines Vergleichs das Bestimmen des Vorhandenseins einer oder mehrerer elektrischer Verbindungen über die zwei oder mehr Teile und die mindestens eine Umgebung umfasst.

6. System nach Anspruch 5, wobei das Bestimmen des Vorhandenseins einer oder mehrerer elektrischer Verbindungen das Bestimmen einer direkten oder indirekten elektrischen Verbindung umfasst.

7. System nach einem der vorangehenden Ansprüche, wobei das Durchführen eines Vergleichs das Abbilden von Informationen aus der Designdateneinheit auf die abgerufenen Korrosionsdaten umfasst.

8. System nach einem der vorangehenden Ansprüche, wobei das System ferner einen Berichtsgenerator umfasst.

9. System nach Anspruch 8, wobei der Prozessor ferner dafür ausgelegt ist, den Grad des angegebenen Korrosionsrisikos festzustellen.

10. System nach einem der vorangehenden Ansprüche, wobei das System im Einsatz eine Plug-in-Komponente in einem CAD-System bildet.

11. System nach einem der Ansprüche 8 bis 10, wobei die abgerufenen Korrosionsdaten mindestens einen Korrosionsfall und Empfehlungsdaten umfassen, und wobei die Anforderung den mindestens einen Korrosionsfall und Empfehlungsdaten einschließt.

12. System nach einem der vorangehenden Ansprüche, wobei die abgerufenen Korrosionsdaten den Namen eines Materials, den Grad einer Umgebungsbeständigkeit, der mit einer Material-Umgebung-Kombination assoziiert ist, und/oder ein mit einem Material assoziiertes galvanisches Potential umfassen.

13. Verfahren zum Identifizieren eines Korrosionsrisikos während des Designs einer mechanischen Baugruppe, wobei das Verfahren von dem System nach einem der vorangehenden Ansprüche ausgeführt wird.

## Revendications

1. Système destiné à l'identification d'un risque de corrosion pendant la conception d'un assemblage mécanique, le système comprenant :

une unité de données de conception destinée à mémoriser les données de conception représentant l'assemblage mécanique ;
une unité de données de corrosion destinée à mémoriser les données de corrosion ; et
un processeur configuré pour :

obtenir des données de conception à partir de l'unité de données de conception ;
obtenir, à partir de l'unité des données de corrosion, des données de corrosion relatives aux données de conception obtenues ;
faire une comparaison des données de conception obtenues avec les données de corrosion obtenues pour identifier un risque de corrosion associé à la conception ; et
fournir, en fonction de ladite comparaison, une indication du risque de corrosion,
dans lequel les données de conception obtenues comprennent des données pour toutes les pièces de l'assemblage mécanique et au moins d'un matériau constitutif associé à chaque pièce,

dans lequel les données de conception obtenues indiquent que ladite au moins une pièce de l'assemblage mécanique est en contact avec au moins un environnement,

dans lequel l'indication du risque de corrosion comprend une indication d'un risque de corrosion général associé à au moins un matériau en contact avec ledit au moins un environnement, et

dans lequel les pièces de l'assemblage mécanique comprennent au moins une paire de pièces et dans lequel faire une comparaison comprend :

le regroupement des pièces de l'assemblage mécanique par paires et l'élimination parmi les paires de pièces, des paires dans lesquelles au moins une parmi les pièces n'est pas conductrice ;

la détermination de l'existence d'un circuit galvanique à travers les paires de pièces retenues et ledit au moins un environnement qui est conducteur de l'électricité ; et

la détermination d'un risque de corrosion galvanique associé à ladite au moins une paire de pièces en fonction de la différence de potentiel galvanique entre leurs matériaux constitutifs respectifs.

2. Système selon la revendication 1, dans lequel le processeur est configuré en outre pour identifier toutes les pièces en contact avec chaque environnement et tous les environnements en contact avec chaque pièce, à l'aide des données de conception obtenues.

3. Système selon la revendication 1, dans lequel la détermination de l'existence du circuit galvanique comprend :

la détermination de si les pièces dans ladite paire sont constituées de matériaux constitutifs distincts ;

la détermination de si au moins une parmi les pièces dans ladite paire présente un plus grand potentiel galvanique que l'autre ; et

la détermination de si ledit au moins un environnement est en contact avec les deux pièces dans ladite paire.

4. Système selon la revendication 1 ou la revendication 3, dans lequel la détermination de l'existence d'un circuit galvanique comprend la détermination d'une connexion électrique directe ou indirecte entre les pièces dans ladite paire.

5. Système selon l'une quelconque des revendications 1, dans lequel les données de conception obtenues comprennent deux ou plusieurs pièces et dans lequel faire une comparaison comprend la détermination de l'existence d'une ou plusieurs connexions électriques par l'intermédiaire de deux ou plusieurs pièces et dudit au moins un environnement.

6. Système selon la revendication 5, dans lequel la détermination de l'existence d'une ou plusieurs connexions électriques comprend la détermination d'une connexion électrique directe ou indirecte.

7. Système selon l'une quelconque des revendications précédentes, dans lequel faire une comparaison comprend de mettre en correspondance les informations provenant de l'unité de données de conception avec les données de corrosion obtenues.

8. Système selon l'une quelconque des revendications précédentes, le système comprenant en outre un générateur de rapports.

9. Système selon la revendication 8, dans lequel le processeur est configuré en outre pour évaluer le niveau de risque de corrosion indiqué.

10. Système selon l'une quelconque des revendications précédentes, dans lequel, lors de l'utilisation, le système forme un élément intégrable dans un système de CAO.

11. Système selon l'une quelconque des revendications 8 à 10, dans lequel les données de corrosion obtenues comprennent au moins un cas de corrosion et des données de conseil et dans lequel la demande comporte au moins un cas de corrosion et des données de conseil.

12. Système selon l'une quelconque des revendications précédentes, dans lequel les données de corrosion obtenues comprennent au moins un nom de matériau, un niveau de durabilité environnementale associé à une combinaison matériau-environnement et un potentiel galvanique associé à un matériau.

13. Procédé d'identification d'un risque de corrosion pendant la conception d'un assemblage mécanique, le procédé étant mis en oeuvre par le système selon l'une quelconque des revendications précédentes.

100

FIGURE 1

FIGURE 2A

FIGURE 2B

FIGURE 3A

FIGURE 3B

FIGURE 4

FIGURE 5

FIGURE 6A

FIGURE 6B

FIGURE 7

| Region name | Environment type |
|---|---|
| ENVIRONMENT_1 | Fresh water |
| ENVIRONMENT_2 | Salt water |

FIGURE 8

| Connection Name | Master list entry reference |
|---|---|
| ENVIRONMENT_1 | 1 |
| ENVIRONMENT_2 | 2 |

FIGURE 9

The assembly is
the root node

Environments and part
instances are listed as
assembly child nodes

```
<assembly id="0">
    <log_info assembly_name="INSULATED_RIVET_PLATE" log_time="Wed Aug 28 14:33:05 2013"/>
    <environment value="Water (fresh)" id="1"/>
    <part name="UPPER" id="39" material="COPPER_C12200_WROUGHT_HARD__1">
        <is_in_contact_with_environment id="1"/>
        <is_in_contact_with_part id="75"/>
    </part>
    <part name="LOWER" id="42" material="COPPER_C12200_WROUGHT_HARD__1">
        <is_in_contact_with_environment id="1"/>
        <is_in_contact_with_part id="75"/>
    </part>
    <part name="WASHER" id="75" material="ETHYLENE_VINYL_ACETATE_RUBBER_2">
        <is_in_contact_with_environment id="1"/>
        <is_in_contact_with_part id="39"/>
        <is_in_contact_with_part id="42"/>
        <is_in_contact_with_part id="91"/>
    </part>
    <part name="BOLT" id="91" material="CARBON_STEEL_AISI_1030_ANNEAL">
        <is_in_contact_with_environment id="1"/>
        <is_in_contact_with_part id="75"/>
    </part>
</assembly>
```

Connections are listed
as part instance child
nodes

FIGURE 10

| Model Environments | |
|---|---|
| ID | Type |
| 1 | Water (fresh) |

FIGURE 11A

| Model parts | | | | | | |
|---|---|---|---|---|---|---|
| Name | ID | Material | Mapped environment material | Mapped Galvanic Material | Conductive part connections | Environments |
| ENG_BLOCK_REAR | 170 | ALUMINUM_3800_DIE_CAST_F | Aluminium alloys | Aluminium A5 | 148, 44, 45, 55, 100, 105, 109 | 1 |
| ENG_BEARING | 148 | CARBON_STEEL_AISI_1015_ANNEAL | Medium carbon steel | Carbon steel | 170 | 1 |
| ENG_BLOCK_FRONT | 44 | ALUMINUM_3800_DIE_CAST_F | Aluminium alloys | Aluminium A5 | 170, 151, 45, 52, 100, 105, 109 | 1 |
| ENG_BEARING | 151 | CARBON_STEEL_AISI_1015_ANNEAL | Medium carbon steel | Carbon steel | 44 | 1 |
| CYLINDER | 45 | ALUMINUM_3800_DIE_CAST_F | Aluminium alloys | Aluminium A5 | 170, 44, 52, 55 | 1 |
| BOLT_5-18 | 52 | STAINLESS_STEEL_AUSTENITIC_AI | Stainless steel | Stainless steel 18-9 | 44, 45 | 1 |
| BOLT_5-18 | 55 | STAINLESS_STEEL_AUSTENITIC_AI | Stainless steel | Stainless steel 18-9 | 170, 45 | 1 |
| BOLT_5-28 | 100 | STAINLESS_STEEL_AUSTENITIC_AI | Stainless steel | Stainless steel 18-9 | 170, 44 | 1 |
| BOLT_5-28 | 105 | STAINLESS_STEEL_AUSTENITIC_AI | Stainless steel | Stainless steel 18-9 | 170, 44 | 1 |
| BOLT_5-28 | 109 | STAINLESS_STEEL_AUSTENITIC_AI | Stainless steel | Stainless steel 18-9 | 170, 44 | 1 |
| CRANKSHAFT | 1640039 | ETHYLENE_VINYL_ACETATE_RUBBER_2 | EVA | | | -1 |
| FLYWHEEL | 1640043 | ALUMINUM_A2010_CAST_T7 | Aluminium alloys | Aluminium A5 | | 1 |
| PISTON | 1650039 | ALUMINUM_A3320_CAST_T5 | Aluminium alloys | Aluminium A5 | 1650041, 1650043 | 1 |
| PISTON_PIN | 1650041 | MG12SICP | Magnesium alloys | AlMgSi alloy | 1650039, 168 | 1 |
| PISTON_RING | 1650043 | CAST_IRON_GRAY_FLAKE_GRAPHITE | Cast iron | Cast iron | 1650039 | 1 |
| CONNECTING_ROD | 168 | ALUMINUM_A2010_CAST_T7 | Aluminium alloys | Aluminium A5 | 1650041 | 1 |

FIGURE 11B

FIGURE 12

FIGURE 13

| Material-Environment durability | Risk ratings |
|---|---|
| D | Very high |
| B | High |
| C | Medium |
| A | Low |

FIGURE 14

| Galvanic potential difference /mV | Risk rating | |
|---|---|---|
| | Connected | Unconnected |
| >500 | Very high | Low |
| 250-500 | High | Low |
| 150-250 | Medium | Low |
| <150 | Low | Low |

FIGURE 15

### Corrosion Risk Report - Assembly DOUBLE_CELL at Wed Sep 04 17:25:48 2013

Significant problems were detected with your design

| | |
|---|---|
| Perspective: | Part |
| Threshold for extended galvanic problems: | Low |
| Threshold for extended general problems: | Low |

**Galvanic**

| Corroded part | Potential corrosion problem | Cathodic parts | Risk rating | Galvanic p.d. /mV | Completed circuit | Database link | Ignore |
|---|---|---|---|---|---|---|---|
| LEFT | Aluminium alloys may corrode due to presence of Cast iron | MIDDLE | Low | 140 | ✓ | | |
| MIDDLE | Cast iron may corrode due to presence of Copper alloys | RIGHT | High | 380 | ✓ | ▣ | |

**General**

| Corroded part | Potential corrosion problem | Risk rating | Database link | Ignore |
|---|---|---|---|---|
| LEFT | Aluminium alloys may be corroded by Water (salt) | Medium | | |
| RIGHT | Copper alloys may be corroded by Water (salt) | Low | | |
| INNER_INSULATION | EVA may be corroded by Water (salt) | Medium | | |
| MIDDLE | Cast iron may be corroded by Water (salt) | High | ▣ | |
| OUTER_INSULATION | EVA may be corroded by Water (salt) | Medium | | |
| BASE_INSULATION | EVA may be corroded by Water (salt) | Medium | | |

FIGURE 16

| Defining parameters | | | Details | |
|---|---|---|---|---|
| Material 1 | Material 2 | Environment | Description | Diagram |
| | | | | |
| Copper alloys | None | Industrial Atmosphere | Brass will corr | brass_atmosphe |
| Medium carbon steel | None | Water (fresh) | Steel is used t | Fe-H2O-corrosio |

| Generated parameters | | | | | |
|---|---|---|---|---|---|
| Corrosion type | Attacked material | Degree of attack | Risk | Solutions | References |
| | | | | | |
| Environmental | Copper alloys | B | Medium | Regular m | http://even |
| Environmental | Medium carbon steel | B | Medium | Use stainl | M. Morcillo, |

FIGURE 17

## Copper alloys in a Industrial atmosphere environment

| Material 1 | Copper alloys |
|---|---|
| Material 2 | None |
| Environment | Industrial atmosphere |
| Description | Brass will corrode in atmospheric conditions due to limited presence of, for example, chloride ions in humid air. It is used as a coated bulk material in many situations and if its coating is damaged it may corrode |
| Diagram | |
| Attacked Material | Copper alloys |
| Durability rating | B |
| Corrosion risk | Medium |
| Solutions | Regular maintenance of coating |
| References | http://events.nace.org/library/corrosion/cases/antenna.asp |

FIGURE 18

FIGURE 19A

FIGURE 19B

FIGURE 20

FIGURE 21

FIGURE 22

FIGURE 23

FIGURE 24

FIGURE 25

## Corrosion Risk Report - Assembly ENGINE at Tue Sep 10 09:57:50 2013

Significant problems were detected with your design

| Perspective: | Part |
| Galvanic threshold: | Low |
| General threshold: | Low |

### Galvanic

| Corroded part | Potential corrosion problem | Cathodic parts | Risk rating | Risk factors | | Database link | Ignore |
| | | | | Galvanic p.d. /mV | Completed circuit | | |
|---|---|---|---|---|---|---|---|
| ENG_BLOCK_REAR | Aluminium alloys may corrode due to presence of Stainless steel | BOLT_5-18, BOLT_5-18, BOLT | Very high | 840 | ✓ | ▤ | |
| | Aluminium alloys may corrode due to presence of Medium carbon steel | CRANKSHAFT | Low | 90 | ✓ | ▤ | |
| | Aluminium alloys may corrode due to presence of Cast iron | PISTON_RING | Low | 140 | ✓ | | |
| ENG_BLOCK_FRONT | Aluminium alloys may corrode due to presence of Stainless steel | BOLT_5-18, BOLT_5-18, BOLT | Very high | 840 | ✓ | ▤ | |
| | Aluminium alloys may corrode due to presence of Medium carbon steel | CRANKSHAFT | Low | 90 | ✓ | ▤ | |
| | Aluminium alloys may corrode due to presence of Cast iron | PISTON_RING | Low | 140 | ✓ | | |
| CYLINDER | Aluminium alloys may corrode due to presence of Stainless steel | BOLT_5-18, BOLT_5-18, BOLT | Very high | 840 | ✓ | ▤ | |
| | Aluminium alloys may corrode due to presence of Medium carbon steel | CRANKSHAFT | Low | 90 | ✓ | ▤ | |
| | Aluminium alloys may corrode due to presence of Cast iron | PISTON_RING | Low | 140 | ✓ | | |
| CRANKSHAFT | Medium carbon steel may corrode due to presence of Stainless steel | BOLT_5-18, BOLT_5-18, BOLT | Very high | 750 | ✓ | | |

FIGURE 26A

### General

| Corroded part | Potential corrosion problem | | Risk rating | | Database link | Ignore |
|---|---|---|---|---|---|---|
| ENG_BLOCK_REAR | Aluminium alloys may be corroded by Water (fresh) | | Low | | ▤ | |
| ENG_BLOCK_FRONT | Aluminium alloys may be corroded by Water (fresh) | | Low | | ▤ | |
| CYLINDER | Aluminium alloys may be corroded by Water (fresh) | | Low | | ▤ | |
| BOLT_5-18 | Stainless steel may be corroded by Water (fresh) | | Low | | | |

FIGURE 26B

**Corrosion Risk Report - Assembly ENGINE at Tue Sep 10 09:57:50 2013**

Significant problems were detected with your design

| Perspective: | Material |
|---|---|
| Galvanic threshold: | Low |
| General threshold: | Low |

**Galvanic**

| Corroded material | Potential corrosion problem | Part(s) affected | Risk rating | Risk factors | | Database link | Ignore |
|---|---|---|---|---|---|---|---|
| | | | | Galvanic p.d. /mV | Completed circuit | | |
| Aluminium alloys | Aluminium alloys may corrode due to presence of Stainless steel | (ENG_BLOCK_REAR, BOLT_5- | Very high | 840 | ✓ | 🖹 | |
| | Aluminium alloys may corrode due to presence of Medium carbon steel | (ENG_BLOCK_REAR, CRANKSI | Low | 90 | ✓ | 🖹 | |
| | Aluminium alloys may corrode due to presence of Cast iron | (ENG_BLOCK_REAR, PISTON_ | Low | 140 | ✓ | | |
| Medium carbon stee | Medium carbon steel may corrode due to presence of Stainless steel | (CRANKSHAFT, BOLT_5-18); (( | Very high | 750 | ✓ | | |
| | Medium carbon steel may corrode due to presence of Cast iron | (CRANKSHAFT, PISTON_RING | Low | 50 | ✓ | | |
| Cast iron | Cast iron may corrode due to presence of Stainless steel | (PISTON_RING, BOLT_5-18); ( | Very high | 700 | ✓ | | |

**General**

| Corroded material | Potential corrosion problem | Part(s) affected | Risk rating | | | Database link | Ignore |
|---|---|---|---|---|---|---|---|
| Aluminium alloys | Aluminium alloys may be corroded by Water (fresh) | ENG_BLOCK_REAR, ENG_BLO | Low | | | 🖹 | |
| Stainless steel | Stainless steel may be corroded by Water (fresh) | BOLT_5-18, BOLT_5-18, BOLT | Low | | | | |
| Medium carbon stee | Medium carbon steel may be corroded by Water (fresh) | CRANKSHAFT | Medium | | | 🖹 | |
| Cast iron | Cast iron may be corroded by Water (fresh) | PISTON_RING | Medium | | | | |

FIGURE 27

| Name | Value |
|---|---|
| CASE_1_REFERENCES | x/y:x/z:A |
| CASE_1_CHECKSUM | SHA-1 of references + materials + environment type + connections |
| CASE_2_REFERENCES | ... |

FIGURE 28

FIGURE 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KEITH LEGG.** *Computational Galvanic Corrosion Prediction,* 01 November 2011

- *ASETSDefense 2011 Side meeting on Computational and Database Methods,* 07 February 2011